# EUROPEAN PATENT SPECIFICATION

(11) **EP 2 349 795 B1**
(45) Date of publication and mention of the grant of the patent: **12.03.2014**
(21) Application number: 08816427.2
(22) Date of filing: 26.09.2008
(51) Int. Cl.: B60R 25/00, G07C 9/00

(54) **INTEGRATED VEHICLE ENTRY/DATA TRANSFER DEVICE AND METHOD**
INTEGRIERTE FAHRZEUGZUGANGS-/-DATENÜBERTRAGUNGSVORRICHTUNG UND VERFAHREN
DISPOSITIF INTÉGRÉ D ENTRÉE DANS UN VÉHICULE/TRANSFERT DE DONNÉES ET PROCÉDÉ

(43) Date of publication of application: 03.08.2011
(73) Proprietor: Panasonic Automotive Systems Company of America Division of Panasonic Corporation of North America, Peachtree City, GA 30269 (US)
(72) Inventor: TARTE, Christopher, T., Lewisville TX 75077 (US); HICKERSON, Dallas, D., Sharpsburg GA 30277 (US)
(74) Representative: Schmidt, Steffen
(86) International application number: PCT/US2008/011248
(87) International publication number: WO 2010/036228

(56) References cited:
- US-A1- 2004 090 773
- US-A1- 2004 230 348
- US-A1- 2005 277 438
- US-A1- 2006 049 922
- US-A1- 2006 161 281
- US-A1- 2006 219 776
- US-B2- 7 394 353

## Description

### FIELD OF THE INVENTION

The present invention generally relates to a system and method for data transfer. In particular, exemplary embodiments of the present invention relate to a vehicle entry device that is adapted to store data such as audio data for transfer to a vehicle system in a vehicle.

### BACKGROUND OF THE INVENTION

This section is intended to introduce the reader to various aspects of art which may be related to various aspects of the present invention which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Automotive systems are continuing to offer more alternatives to consumers. Known systems allow a user to transfer data such as audio music files from a source outside the vehicle (such as a portable media player) to an audiovisual system in the vehicle. Thus, a user may transfer preferred entertainment content to the audiovisual system of the vehicle, reducing the need to constantly bring separate media (for example, CDs or DVDs) into the vehicle to be played. Compatibility problems, however, may prevent a user from being able to transfer data from a portable media player of a particular type to the automotive audiovisual system. In addition, the user must carry the device containing the stored data into the car. An improved system and method of transferring data from a source outside a vehicle to an audiovisual system on board the vehicle is desirable.

Document US 2006/0219776 A1 discloses a pocket-size RFID reader apparatus having a contactless interface and a slot for insertion of a contactless smart card fob. The apparatus may have a wireless interface; and a slot for insertion of a wireless SD I/O device. The apparatus may have a slot for insertion of an external memory device. The apparatus may have a mechanical connection (contact) interface. The apparatus may also have an RF interface.

Document US 2005/0277438 A1 discloses an apparatus for providing personal electronic access to voice communication, audio entertainment, and automotive functions. The apparatus comprises an integrated key artifact, comprising a physically and, optionally, electronically integrated combination of an electronic device for accessing automotive functions, and an electronic device for producing music from data files. An exemplary integrated key artifact comprises a physically and electronically integrated cell phone, MP3 player, and electronic key fob.

Document US 2004/0230348 A1 discloses a portable data exchange device including a data input, a data output, and a memory which is incorporated into a mechanical or electronic key that is required for operating a motor vehicle. The data exchange device can exchange data bi-directionally or uni-directionally with a data processing device in the vehicle and with an external input/output terminal.

Document US 2006/0049922 A1 discloses a multi-functional fob which provides a programmable lock/unlock button; a credit card strip; and a rechargeable interface. One or a combination of the features may be integrated into a single fob. Each fob function may be integrated into an electronic device such as a PDA, a cellular phone, a two-way radio, an audio player, or a multi-communication signal fob repeater.

Document US 7,394,535 B2 discloses a modular vehicle key device for controlling vehicle access and operation. The device is formed by joining two separable modules, a first module containing vehicle access and/or operation authorizing elements, such as a keyless entry transmitter and/or an ignition key, and a second module for off-vehicle storage of personal adjustment settings and/or other data. With each use of the modular key device, the data in the storage module is transferred to the vehicle to ensure the operator's settings and data are always present.

### SUMMARY OF THE INVENTION

There is provided an integrated vehicle entry/data transfer device and method of operating the same in accordance with claims 1 and 5, respectively. Preferred embodiments of the device and the method are recited in the dependent claims.

### BRIEF DESCRIPTION OF THE DRAWINGS

The above-mentioned and other features and advantages of the present invention, and the manner of attaining them, will become apparent and be better understood by reference to the following description of one embodiment of the invention in conjunction with the accompanying drawings, wherein:
FIG. 1 is a perspective view of an integrated vehicle entry/data transfer device in accordance with an exemplary embodiment of the present invention;
FIG. 2 is a functional block diagram of the integrated vehicle entry/data transfer device shown in FIG. 1; and
FIG. 3 is a process flow diagram of a method in accordance with an exemplary embodiment of the present invention.

Corresponding reference characters indicate corresponding parts throughout the several views. The exemplifications set out herein illustrate a preferred embodiment of the invention, in one form, and such exemplifications are not to be construed as limiting in any manner the scope of the invention.

### DETAILED DESCRIPTION OF THE PREFERRED EMBODIMENTS

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

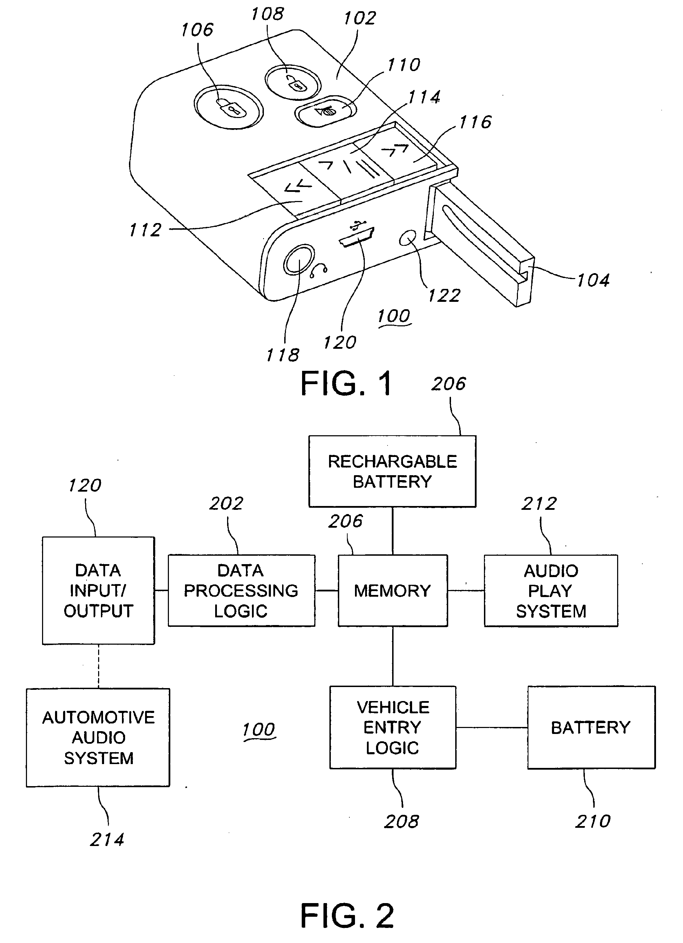

FIG. 1 is a perspective view of an integrated vehicle entry/data transfer device in accordance with an exemplary embodiment of the present invention. The integrated vehicle entry/data transfer device is generally referred to by the reference number 100. The integrated vehicle entry/data transfer device 100 combines the ability to store data with the ability to perform a vehicle entry function such as unlocking or locking the doors of a vehicle. By combining the functions of vehicle entry and data storage, the integrated vehicle entry/data transfer device 100 allows a user to easily transfer data from a source outside the vehicle to a vehicle system inside the vehicle. Moreover, the capability of the integrated vehicle entry/data transfer device 100 to perform a vehicle entry function allows a user to transfer data such as audio data, video data, navigation system data or the like to a vehicle system without the need to use additional devices such as a personal audio player.

In the exemplary embodiment shown in FIG. 1, the integrated vehicle entry/data transfer device 100 comprises a body portion 102 and a key blade 104. The body portion 102 contains electronics and memory to facilitate the operation of the integrated vehicle entry/data transfer device 100, as fully set forth below. In addition, the body portion 102 may provide support for a variety of buttons and other controls, as well as one or more data input/output ports. The key blade 104 operates to unlock the user's vehicle and may additionally operate to start the vehicle.

In an exemplary embodiment of the present invention, the body portion 102 of the integrated vehicle entry/data transfer device 100 supports a lock button 106, an unlock button 108 and an alarm button 110. The lock button 106, when pressed, may generate a wireless control signal to lock all the doors of an associated vehicle (not shown). The unlock button 108 may generate a wireless command to unlock one or more doors of the vehicle. The alarm button 110 may be adapted to sound an alarm such as repeatedly sounding the horn of the vehicle to indicate that the user is in distress.

An exemplary embodiment of the present invention may include an internal audio play system to play audio data transferred to the integrated vehicle entry/data transfer device 100 from an external source. The inclusion of an internal audio play system allows the integrated vehicle entry/data transfer device 100 to function as a portable media player that may be used even when the user is not in the vehicle. If such an internal audio play system is included, the body portion 102 of the integrated vehicle entry/data transfer device 100 may include controls to operate the internal audio play system. For example, the body portion 102 may include a rewind button 112, a pause/play button 1 14, and a fast forward button 116. In addition, an exemplary embodiment of the present invention may include a head phone output 118 to deliver audio data to a set of headphones worn by the user.

As fully described below, the body portion 102 of the integrated vehicle entry/data transfer device 100 may comprise one or more data input/output ports to receive data transferred from an external source. In the exemplary embodiment illustrated in FIG. 1, the body portion 102 comprises a data input/output port 120, which may operate according to any typical communication protocol. Examples of such communication protocols include the Universal Serial Bus (USB) protocol, the IEEE 1394 high performance serial bus protocol or the like. In addition, the body portion 102 of the integrated vehicle entry/data transfer device 100 may comprise a wireless communication interface 122 operating according to a communication protocol such as WiFi.

Those of ordinary skill in the art will appreciate that data stored on the integrated vehicle entry/data transfer device 100 using a particular input/output port may be transferred to a vehicle system using a different input/output port. For example, data may be loaded into the integrated vehicle entry/data transfer device using the data input/output port 120 and transferred to a vehicle system via the wireless communication interface 122. In an exemplary embodiment of the present invention, the body portion 102 or the key blade 104 of the integrated vehicle entry/data transfer device 100 may include one or more physical contacts that engage with the vehicle when the key blade 104 is inserted into the ignition of the vehicle. These contacts may allow the transfer of data from the integrated vehicle entry/data transfer device 100 to a vehicle system.

An exemplary embodiment of the present invention allows a user to conveniently bring data such as audio files into an automobile by using an existing element of the automobile (i.e., the key device already carried by the user). Moreover, the integrated vehicle entry/data transfer device 100 can be used in conjunction with or as a substitute for external audio devices such as a USB stick, a USB hard drives or other commercially available consumer electronic audio and/or video players. The use of the integrated vehicle entry/data transfer device 100 to transport data to a vehicle system in the vehicle allows the owner to carry one less device relative to using a separate data storage device such as a USB stick or personal audio player to transport data. This is true because car keys are typically kept on a person while they are outside of their automobile. In other words, the user already has car keys, so the need to carry yet an additional device is avoided.

FIG. 2 is a functional block diagram of the integrated vehicle entry/data transfer device 100 shown in FIG. 1. The block diagram is generally referred to by the reference number 200. Those of ordinary skill in the art will appreciate that the various functional blocks shown in FIG. 2 may comprise hardware elements (including circuitry), software elements (including computer code stored on a machine-readable medium) or a combination of both hardware and software elements. Various functional blocks may include tangible machine-readable media such as memory that is adapted to store program instructions that facilitate the performance of a method in accordance with an exemplary embodiment of the present invention.

As shown in FIG. 2, the data input/output port 120 is connected to data processing logic 202. The data processing logic 202, which may be implemented in a field programmable gate array (FPGA) or the like, is adapted to manage the transfer of data from an external source such as a computer system or the like to the integrated vehicle entry/data transfer device 100. The data processing logic 202 stores the data received from the external source in a memory 204 of the integrated vehicle entry/data transfer device 100. In an exemplary embodiment of the present invention, the memory 204 is expandable. In other words, the user may add additional memory to increase the amount of data that may be stored in the integrated vehicle entry/data transfer device 100, if desired.

The memory 204 may be powered by a rechargeable battery 206. In an exemplary embodiment of the present invention, the rechargeable battery 206 is recharged from a vehicle power supply on the vehicle whenever the key is engaged in the vehicle ignition. In addition, the rechargeable battery 206 may also be recharged when the integrated vehicle entry/data transfer device 100 is connected to receive data from an external device such as a computer system. Further, the rechargeable battery 206 may be adapted to be charged via inductive charging. In an exemplary embodiment of the present invention that is adapted for inductive charging, the user places the key in an inductive charging location to maintain the charge on the rechargeable battery 206. While located in the inductive charging location, the rechargeable battery 206 is inductively charged.

The integrated vehicle entry/data transfer device 200 comprises vehicle entry logic 208 that is adapted to perform a vehicle entry function, such as unlocking the doors of vehicle. The vehicle entry logic 208 is powered by a battery 210, which may operate independently of the rechargeable battery 206 used to power the memory 204. Those of ordinary skill in the art will appreciate that the vehicle entry logic 208 may implemented in the same physical device as the data processing logic 202 depending on system design considerations.

In FIG. 2, the exemplary integrated vehicle entry/data transfer device 200 includes an audio play system 212. As set forth above, the audio play system 212 allows the user to use the integrated vehicle entry/data transfer device 200 as a portable media player. For example, the audio play system 212 may deliver audio signals to a set of headphones worn by the user via a headphone jack 118.

In the exemplary embodiment of the integrated vehicle entry/data transfer device 200 shown in FIG. 2, the data input/output port 120 is shown in communication with an automotive audio system 214 of the vehicle. After data has been loaded into the memory 204 from an external source and the vehicle is entered via the performance of a vehicle entry function by the vehicle entry logic 208, the data stored in the memory 204 may be transferred to the automotive audio system 214. While an automotive audio system is illustrated in FIG. 2, those of ordinary skill in the art will appreciate that the data stored in the memory 204 from an external source may comprise data other than audio data. For example, the data may comprise video data or navigation system data, for example. In the case of navigation system data, the data would be transferred to a vehicle navigation system. Video data would be transferred to a suitable vehicle video system, and so on.

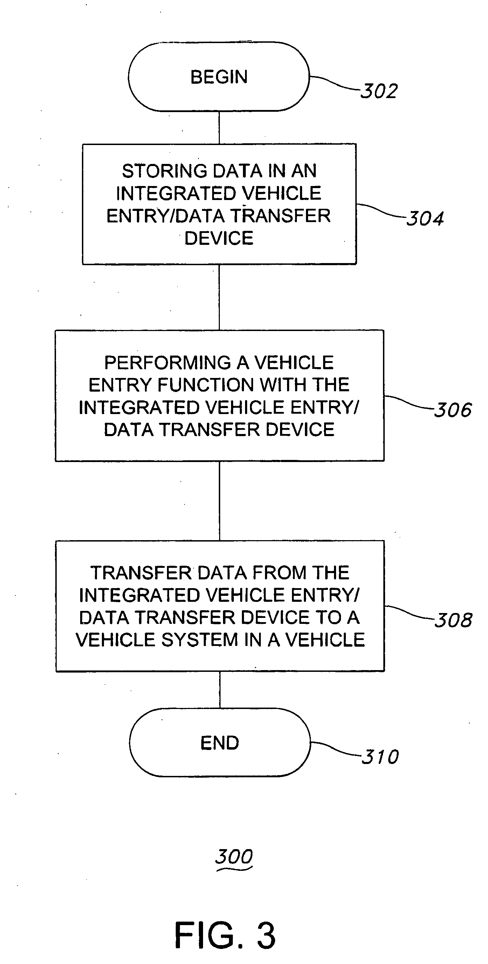

FIG. 3 is a process flow diagram of a method in accordance with an exemplary embodiment of the present invention. The process is generally referred to by the reference number 300. At block 302, the process begins.

At block 304, data is stored in an integrated vehicle entry/data transfer device 100 (FIG. 1). As set forth above, the data stored in the integrated vehicle entry/data transfer device 100 (FIG. 1) may comprise audio data, video data, or navigation system data, to name just a few examples. Those of ordinary skill in the art will appreciate that any type of data that may be stored on a tangible machine- readable medium may be transferred to a vehicle system via the integrated vehicle entry/data transfer device 100 (FIG. 1).

At block 306, a vehicle entry function is performed with the integrated vehicle entry/data transfer device 100 (FIG. 1). By way of example, the integrated vehicle entry/data transfer device 100 (FIG. 1) may perform the vehicle entry function of remotely unlocking one or more doors of an associated vehicle to allow the user to enter the vehicle with the integrated vehicle entry/data transfer device 100 (FIG. 1). After taking the integrated vehicle entry/data transfer device 100 (FIG. 1) into the vehicle, data is transferred from the integrated vehicle entry/data transfer device 100 (FIG. 1) to a vehicle system in the vehicle, as shown at block 308. At block 310, the process ends.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the scope of the invention as defined by the following appended claims.

## Claims

1. An integrated vehicle entry/data transfer device (100), comprising: vehicle entry logic (208) adapted to provide at least one vehicle entry function; a data input/output port (120) that is adapted to receive external data; a memory (204) that is adapted to store external data received via the data input/output port (120); and data processing logic (202) adapted to transfer data from the data input/output port (120) to the memory (204) and from the memory (204) to a vehicle system in a vehicle, whereby the external data is brought into the vehicle via operation of the at least one vehicle entry function and transferred to the vehicle system from the memory,
**characterized by** further comprising a first battery (210) adapted to provide power to the vehicle entry logic (208); and a second battery (206) adapted to provide power to the memory independent of the first battery, wherein the second battery (206) is rechargeable via inductive charging.

2. The integrated vehicle entry/data transfer device (100) recited in claim 1, wherein the data processing logic (202) is adapted to transfer the data to the vehicle system via the data input/output port (120).

3. The integrated vehicle entry/data transfer device (100) recited in claim 1, comprising an internal audio play system (212) for playing the external data, and/or wherein the at least one vehicle entry function comprises a door unlock function, and/or
wherein the data input/output port (120) comprises a USB port and/or
a wireless communication interface, and/or
wherein the data comprises audio and/or video and/or navigational data.

4. The integrated vehicle entry/data transfer device (100) recited in claim 3, wherein the internal audio play system (212) is adapted to provide an audio signal to a set of headphones associated with the integrated vehicle entry/data transfer device (100).

5. A method (300) of operating an integrated vehicle entry/data transfer device (100), comprising: storing (304) data in the integrated vehicle entry/data transfer device (100);
performing (306) a vehicle entry function with the integrated vehicle entry/data transfer device (100); and transferring (308) data from the integrated vehicle entry/data transfer device (100) to a vehicle system in a vehicle,
**characterized by** further comprising: providing power to a vehicle entry logic that performs the vehicle entry function in the integrated vehicle entry/data transfer device (100) via a first battery (210); and providing power to a memory that stores the data in the integrated vehicle entry/data transfer device (100) via a second battery (206) independent of the first battery, wherein the second battery (206) is rechargeable via inductive charging.

6. The method (300) recited in claim 5, comprising playing the data on an audio play system (212) that comprises a portion of the integrated vehicle entry/data transfer device (100).

7. The method (300) recited in claim 5, comprising sending the data to a set of headphones associated with the integrated vehicle entry/data transfer device (100), and/or
wherein the at least one vehicle entry function comprises a door unlock function, and/or
wherein the data is transferred to the integrated vehicle entry/data transfer device (100) via a USB port and/or via a wireless communication interface, and/or
wherein the data comprises audio and/or video and/or navigational data.

## Patentansprüche

1. Integrierte Fahrzeug-Eingabe-/Datenübertragungseinrichtung (100), die umfasst: eine Fahrzeug-Eingabelogik (208), die dazu eingerichtet ist, wenigstens eine Fahrzeug-Eingabefunktion bereitzustellen, einen Daten-Eingangs-/Ausgangsanschluss (120), der dazu eingerichtet ist, externe Daten zu empfangen, einen Speicher (204), der dazu eingerichtet ist, über den Daten-Eingangs-/Ausgangsanschluss (120) empfangene externe Daten zu speichern, und eine Datenverarbeitungslogik (202), die dazu eingerichtet ist, Daten vom Daten-Eingangs-/Ausgangsanschluss (120) an den Speicher (204) und vom Speicher (204) an ein Fahrzeugsystem in einem Fahrzeug zu übertragen, wobei die externen Daten durch den Betrieb der wenigstens einen Fahrzeug-Eingabefunktion in das Fahrzeug eingebracht und vom Speicher an das Fahrzeugsystem übertragen werden,
**dadurch gekennzeichnet, dass** ferner eine erste Batterie (210), die dazu eingerichtet ist, der Fahrzeug-Eingabelogik (208) Energie zuzuführen, und eine zweite Batterie (206) enthalten ist, dazu eingerichtet ist, dem Speicher unabhängig von der ersten Batterie Energie zuzuführen, wobei die zweite Batterie (206) durch induktive Aufladung wiederaufladbar ist.

2. Integrierte Fahrzeug-Eingabe-/Datenübertragungseinrichtung (100) nach Anspruch 1, wobei die Datenverarbeitungslogik (202) dazu eingerichtet ist, die Daten über den Daten-Eingangs-/Ausgangsanschluss (120) an das Fahrzeugsystem zu übertragen.

3. Integrierte Fahrzeug-Eingabe-/Datenübertragungseinrichtung (100) nach Anspruch 1,
- die ein internes Audio-Abspielsystem (212) zum Abspielen der externen Daten umfasst, und/oder
- wobei die wenigstens eine Fahrzeug-Eingabefunktion eine Türentriegelungsfunktion umfasst, und/oder
- wobei der Daten-Eingangs-/Ausgangsanschluss (120) einen USB-Anschluss und/oder eine drahtlose Kommunikationsschnittstelle umfasst, und/oder
- wobei die Daten Audio- und/oder Video- und/der Navigationsdaten umfassen.

4. Integrierte Fahrzeug-Eingabe-/Datenübertragungseinrichtung (100) nach Anspruch 3, wobei das interne Audio-Abspielsystem (212) dazu eingerichtet ist, einem Kopfhörersatz, der der integrierten Fahrzeug-Eingabe-/Datenübertragungseinrichtung (100) zugeordnet ist, ein Audiosignal zuzuführen.

5. Verfahren (300) zum Betreiben einer integrierten Fahrzeug-Eingabe-/Datenübertragungseinrichtung (100), das umfasst:
- Speichern (304) von Daten in der integrierten Fahrzeug-Eingabe-/Datenübertragungseinrichtung (100),
- Ausführen (306) einer Fahrzeug-Eingabefunktion mit der integrierten Fahrzeug-Eingabe-/Datenübertragungseinrichtung (100), und
- Übertragen (308) von Daten von der integrierten Fahrzeug-Eingabe-/Datenübertragungseinrichtung (100) an ein Fahrzeugsystem im Fahrzeug,
**dadurch gekennzeichnet, dass** es ferner umfasst:
- Zuführen von Energie an eine Fahrzeug-Eingabelogik, die die Fahrzeug-Eingabefunktion in der integrierten Fahrzeug-Eingabe-/Datenübertragungseinrichtung (100) ausführt, über eine erste Batterie (210), und Zuführen von Energie an einen Speicher, der die Daten in der integrierten Fahrzeug-Eingabe-/Datenübertragungseinrichtung (100) speichert, über eine zweite Batterie (206), und zwar unabhängig von der ersten Batterie, wobei die zweite Batterie (206) durch induktive Aufladung wiederaufladbar ist.

6. Verfahren (300) nach Anspruch 5, das das Abspielen der Daten auf einem Audio-Abspielsystem (212) umfasst, das einen Abschnitt der integrierten Fahrzeug-Eingabe-/Datenübertragungseinrichtung (100) umfasst.

7. Verfahren (300) nach Anspruch 5,
- das das Senden der Daten an einen Kopfhörersatz umfasst, der der integrierten Fahrzeug-Eingabe-/Datenübertragungseinrichtung (100) zugeordnet ist, und/oder
- wobei die wenigstens eine Fahrzeug-Eingabefunktion eine Türentriegelungsfunktion umfasst, und/oder
- wobei die Daten über einen USB-Anschluss und/oder eine drahtlose Kommunikationsschnittstelle an die integrierte Fahrzeug-Eingabe-/Datenübertragungseinrichtung (100) übertragen werden, und/oder
- wobei die Daten Audio- und/oder Video- und/der Navigationsdaten umfassen.

## Revendications

1. Dispositif intégré (100) d'entrée dans un véhicule/transfert de données, comprenant : une logique (208) d'entrée dans un véhicule adaptée pour fournir au moins une fonction d'entrée dans un véhicule ; un port (120) d'entrée/sortie de données qui est adapté pour recevoir des données externes ; une mémoire (204) qui est adaptée pour mémoriser des données externes reçues via le port (120) d'entrée/sortie de données ; et une logique (202) de traitement de données adaptée pour transférer des données du port (105) d'entrée/sortie de données à la mémoire (204) et de la mémoire (204) à un système de véhicule dans un véhicule, d'où il résulte que les données externes sont amenées dans le véhicule via une opération de la au moins une fonction d'entrée dans un véhicule et transférées vers le système de véhicule depuis la mémoire,
**caractérisé en ce qu'**il comprend en outre une première batterie (210) adaptée pour délivrer de la puissance à la logique (208) d'entrée dans un véhicule ; et une deuxième batterie (206) adaptée pour délivrer de la puissance à la mémoire indépendante de la première batterie, dans lequel la deuxième batterie (206) est rechargeable via une recharge par induction.

2. Dispositif intégré (100) d'entrée dans un véhicule/transfert de données selon la revendication 1, dans lequel la logique (202) de traitement de données est adaptée pour transférer les données vers le système de véhicule via le port (120) d'entrée/sortie de données.

3. Dispositif intégré (100) d'entrée dans un véhicule/transfert de données selon la revendication 1, comprenant un système interne (212) de lecture audio destiné à lire les données externes, et/ou
dans lequel la au moins une fonction d'entrée dans un véhicule comprend une fonction de déverrouillage de portes, et/ou
dans lequel le port (120) d'entrée/sortie de données comprend un port USB et/ou
une interface de communication sans fil, et/ou
dans lequel les données comprennent des données audio et/ou vidéo et/ou de navigation.

4. Dispositif intégré (100) d'entrée dans un véhicule/transfert de données selon la revendication 3, dans lequel le système interne (212) de lecture audio est adapté pour délivrer un signal audio vers un casque associé au dispositif intégré (100) d'entrée dans un véhicule/transfert de données.

5. Procédé (300) de fonctionnement d'un dispositif intégré (100) d'entrée dans un véhicule/transfert de données, comprenant les étapes consistant à : mémoriser (304) des données dans le dispositif intégré (100) d'entrée dans un véhicule/transfert de données ; réaliser (306) une fonction d'entrée dans un véhicule avec le dispositif intégré (100) d'entrée dans un véhicule/transfert de données ; et transférer (308) des données du dispositif intégré (100) d'entrée dans un véhicule/transfert de données à un système de véhicule dans un véhicule,
**caractérisé en ce qu'**il comprend en outre les étapes consistant à : délivrer de la puissance vers une logique d'entrée dans un véhicule qui exécute la fonction d'entrée dans un véhicule dans le dispositif intégré (100) d'entrée dans un véhicule/transfert de données via une première batterie (210) ; et délivrer de la puissance vers une mémoire qui mémorise les données dans le dispositif intégré (100) d'entrée dans un véhicule/transfert de données via une deuxième batterie (206) indépendante de la première batterie, dans lequel la deuxième batterie (206) est rechargeable via une recharge par induction.

6. Procédé (300) selon la revendication 5, comprenant la lecture des données sur un système (212) de lecture audio qui comprend une partie du dispositif intégré (100) d'entrée dans un véhicule/transfert de données.

7. Procédé (300) selon la revendication 5, comprenant l'envoi de données vers un casque associé au dispositif intégré (100) d'entrée dans un véhicule/transfert de données, et/ou
dans lequel la au moins une fonction d'entrée dans un véhicule comprend une fonction de déverrouillage de portes, et/ou
dans lequel les données sont transférées vers le dispositif intégré (100) d'entrée dans un véhicule/transfert de données via un port USB et/ou via une interface de communication sans fil, et/ou
dans lequel les données comprennent des données audio et/ou vidéo et/ou de navigation.
